**Europäisches Patentamt**

**European Patent Office**

**Office européen des brevets**

(19)

(11) Numéro de publication : **0 096 631 B2**

(12)

# NOUVEAU FASCICULE DE BREVET EUROPEEN

(45) Date de publication du nouveau fascicule du brevet : **25.09.91 Bulletin 91/39**

(51) Int. Cl.⁵ : **A23D 7/02**

(21) Numéro de dépôt : **83401108.2**

(22) Date de dépôt : **01.06.83**

(54) Procédé et installation pour l'obtention d'un produit gras en tout point comparable au beurre.

(30) Priorité : **03.06.82 FR 8209686**

(43) Date de publication de la demande :
**21.12.83 Bulletin 83/51**

(45) Mention de la délivrance du brevet :
**13.08.86 Bulletin 86/33**

(45) Mention de la décision concernant
l'opposition :
**25.09.91 Bulletin 91/39**

(84) Etats contractants désignés :
**AT BE CH DE FR GB IT LI LU NL SE**

(56) Documents cités :
**FR-A- 1 573 970**
**US-A- 3 899 605**
**US-A- 4 315 955**

(56) Documents cités :
Shaap, J. E. "Reemulgeren van melkvet in
verband met de verwerking in zuivelprodukten, speciaal boter en kaas", Officieel
Orgaan FNZ 65 (1973) 25, p. 616 ff
Mohr, W., Koenen, K.,"Die Butter", (1958). p.
79

(73) Titulaire : **COOPERATIVE AGRICOLE LA
NOELLE ANCENIS, en abrégé CANA
B.P. 102
F-44150 Ancenis (FR)**

(72) Inventeur : **Terrien, Claude
376, rue des Maitres
F-44150 St Gereon (FR)**
Inventeur : **Lemay, Bernard
319, Allée des Bleuets
F-44150 Ancenis (FR)**

(74) Mandataire : **Phélip, Bruno et al
c/o Cabinet Harlé & Phélip 21, rue de La
Rochefoucauld
F-75009 Paris (FR)**

EP 0 096 631 B2

## Description

La présente invention concerne le domaine de l'industrie alimentaire. Elle a pour objet la production industrielle d'un produit gras capable d'avoir tous les usages du beurre. Plus particulièrement, l'invention est relative à un procédé et à une installation pour l'obtention d'un tel produit à partir d'un mélange de crème de lait et d'une matière grasse végétale.

On constate à l'heure actuelle un besoin en produits de remplacement du beurre aussi bien dans les pays industrialisés, afin de mieux satisfaire aux besoins des consommateurs, que dans d'autres pays, tels que les pays en voie de développement, qui ne disposent pas en abondance de lait en tant que matière première. On a donc déjà proposé d'utiliser des mélanges de matière grasse végétale et de crème de lait de vache pour fabriquer des produits analogues au beurre. On trouve par exemple un bon résumé de l'état de la technique dans la publication "Revue Laitière Française" n° 405, Février 1952, pages 44 et 45 sous le titre: "Des beurres qui n'en sont pas". A titre de référence bibliographique, on peut également citer l'article de R. G. Black dans "The Australian Journal of Dairy Technology", volume 31, No. 1, Mars 1976. Ces articles contiennent un certain nombre d'indications sur les travaux consacrés à la production de produits destinés à remplacer le beurre. A titre complémentaire, on peut également se référer, dans la littérature des brevets, au brevet FR 1.573.970 qui décrit un procédé de fabrication d'un tel produit consistant à mélanger avec la crème à baratter et à baratter avec celle-ci une huile végétale raffinée, par exemple une huile de soja. Le brevet australien n° 487.363 concerne également la fabrication d'un produit à tartiner à partir de crème de lait et d'huile végétale raffinée. Dans ce procédé, la crème est d'abord soumise à un traitement thermique particulier dans lequel on refroidit d'abord la crème à 5°C, on la chauffe ensuite lentement à 20°C (pendant 2 heures), on maintient la crème à cette température pendant 2 heures supplémentaires puis on la refroidit rapidement à 5°C. On ajoute ensuite à la crème ainsi traitée une matière végétale—ou une combinaison de plusieurs matières—telle que l'huile de soja, l'huile de mais ou l'huile de tournesol. L'ensemble subit ensuite une inversion de phase mécanique en vue du barattage, ce qui fournit un produit à tartiner ayant des propriétés comparables au beurre.

La demande de brevet FR 79 01 848 (publication 2.415.429) concerne aussi un procédé de fabrication en continu d'un produit de matière grasse comestible à partir de crème et d'huiles végétales. Dans un tel procédé, il faut aussi prévoir un traitement préalable particulier de la crème, notamment en la maintenant pendant au moins 3 heures dans un réservoir de stockage. Après introduction dans la crème de la plus grande partie de l'huile végétale, le mélange subit un traitement mécanique d'émulsification avant d'être baratté dans des conditions spécifiques à l'aide d'une machine de fabrication de beurre en continu dite de type Fritz.

Malgré les développments récents de la technique, celle-ci à encore besoin d'être améliorée. Par exemple un procédé du type décrit dans le brevet FR 1.573,970, qui prévoit de baratter un mélange de crème et d'huile végétale dans une proportion de 5 à 30% par rapport à la teneur en matière grasse du produit baratté, ne peut conduire à un produit en tout point comparable au beurre aussi bien dans son emploi que dans sa tenue. Quant aux procédés les plus récents, par exemple celui de la demande de brevet FR publiée sous le n° 2.415.429, il est compliqué car, avant le mélange et l'émulsification du mélange, il met en oeuvre deux circuits séparés pour la crème et l'huile végétale. Si la quantité prévue en huile végétale n'est pas utilisée pour le mélangeage, il faut ajouter une quantité complémentaire dans la machine de barattage.

La présente invention remédie aux inconvénients de la technique antérieure et a pour objet un procédé et une installation permettant de fabriquer de manière simple un produit gras comparable au beurre aussi bien dans son emploi que dans sa tenue.

Sous sa forme générale, l'invention concerne un procédé pour l'obtention d'un produit gras en tout point comparable au beurre, à partir d'un mélange de crème de lait et d'au moins une matière grasse végétale, ledit procédé comprenant des étapes de mélangeage, d'homogénéisation et de pasteurisation avant cristallisation, le mélange cristallisé étant ensuite transformé par butyrification en produit gras désiré, ledit procédé étant caractérisé en ce qu'on mélange d'abord à chaud la crème et la matière grasse végétale à une température permettant le mélangeage, mais inférieure à la temperature de pasteurisation, en ce qu'on homogénéise le mélange porté à ladite température en le soumettant à une pression de 10 à 20 bars capable de réduire les globules gras des constituants du mélange à une dimension de l'ordre de 3 à 20 μm tout en assurant la liaison intime des globules de chacun des constituants, en ce qu'on pasteurise le mélange, en ce qu'on le fait ensuite cristalliser en continu et en ce qu'on transforme le mélange cristallisé en produit gras désiré par barattge ou butyrification avec inversion de phase dans des conditions connues et usuelles pour la fabrication de beurre.

Le premier constituant du mélange servant de matière première dans le procédé de l'invention est la crème de lait. Bien que le procédé puisse être également appliqué à des crèmes provenant de laits de diverses origines, la crème de lait de vache est hautement préférée.

Selon une caractéristique avantageuse de l'invention, la crème est utilisée crue, pasteurisée ou non. Elle n'a pas besoin de subir de traitement thermique compliqué ni d'acidification préalable. La teneur en matière

2

grasse de la crème utilisée varie dans la pratique entre 30 et 33% en poids, la valeur préférée se situant à 32% en poids environ. Ces chiffres ne sont donnés qu'à titre indicatif et il apparaîtra à l'homme de l'art qu'il est possible de mettre en oeuvre des crèmes ayant des teneurs en matière grasse différentes. Ainsi, on peut aussi faire appel à des crèmes ayant une teneur en matière grasse de 34% ou davantage (par exemple une crème concentrée à 50% de matière grasse). Les caractéristiques de la crème dépendent en premier lieu de l'installation d'écrémage du lait. Dans celle-ci, il est possible de régler la teneur en matière grasse. Si nécessaire, il est possible, selon l'invention, de prévoir une standardisation de la crème afin de modifier les caractéristiques d'une crème jugée non convenable. Le cas échéant, le réglage des conditions de barattage, dans l'ultime étape du procédé de l'invention, permet aussi de compenser certains écarts minimes sur la teneur en matière grasse du mélange. On peut également utiliser une crème reconstituée de manière conventionnelle à partir de matière grasse lactique anhydre (MGLA ou butter-oil).

Ainsi qu'on l'a souligné précédemment, aucun traitement thermique de la crème n'est nécessaire, autre que le chauffage éventuel destiné à permettre le mélangeage de la crème et de la matière grasse végétale. La seule condition est d'atteindre une température de mélange située entre 30 et 60°C, le plus avantageusement de 45 à 50°C, de manière optimale au voisinage de 50°C. Si l'on utilise une crème provenant directement de l'installation d'écrémage, il n'est pas nécessaire en général de la réchauffer au préalable. Si l'on utilise en revanche une crème conservée à la température de 2 à 3°C, ainsi qu'il est usuel, il faudra prévoir un réchauffage jusqu'à la température souhaitée pour le mélangeage, par exemple jusqu'à 40°C.

L'autre constituant du mélange servant de matière première au procédé de l'invention est une matière grasse végétale ou une combinaison de plusieurs de telles matières. Le procédé est applicable aux matières grasses végétales les plus diverses: huile de soja, d'arachide, de palme, de tournesol, de coprah, de colza et autres matières similaires connues de l'homme de l'art. Parmi ces matières, celles qui sont particulièrement préférées selon l'invention proviennent du coprah ou du colza. Il peut s'agir d'une matière végétale hydrogénée ou non. Les meilleurs résultats ont été obtenus avec du coprah ou du colza hydrogéné, car on a constaté qu'en utilisant une telle matière première, on obtenait un produit final d'excellente tenue, pouvant notamment être pratiquement utilisée dans des pays à température ambiante élevée. Avec le coprah par hydrogéné ou le colza hydrogéné, on aboutit, selon l'invention, à un produit dont la texture finale et le goût sont en tout point comparables au beurre.

Il va sans dire qu'on peut mettre en oeuvre des mélanges de matières végétales, afin de satisfaire à toute exigence particulière concernant les conditions d'utilisation ou la texture du produit final. La présence de coprah ou de colza, hydrogéné ou non, exerce un effet souhaitable sur la texture du produit. Dans de nombreux cas, l'utilisation d'un mélange d'huile végétale et de coprah ou de colza, hydrogéné ou non, peut donc s'avérer souhaitable.

La matière grasse végétale est préchauffée à une température optimale d'utilisation pour son mélange avec la crème de lait. La température précise de réchauffage dépendra bien entendu de la nature de la matière grasse végétale utilisée, l'essentiel étant d'obtenir une fluidité optimale pour réaliser un mélange homogène. A titre d'exemple, le coprah hydrogéné pur est porté de préférence à une température de l'ordre de 60°C. Pour les huiles végétales, la température de réchauffage se situe d'habitude entre 30 et 40°C, par exemple 35°C environ si l'on utilise de l'huile de soja.

La température à laquelle est portée la matière grasse végétale doit être suffisante pour assurer un bon mélangeage avec la crème de lait mais on ne dépassera pas en principe une température de 65°C environ, pour éviter tout phénomène indésirable d'oxydation. Dans les températures de la gamme 30 à 65°C, les matières grasses végétales utilisées sont parfaitement stables.

Dans la première étape du procédé de l'invention, la crème de lait et la matière grasse végétale sont mélangées de manière que la température finale du mélange soit de préférence de 45 à 50°C, en particulier 50°C. Dans la pratique, on utilise un bac usuel pour le mélange, avec des moyens d'agitation.

Selon une autre caractéristique avantageuse de l'invention, le mélange crème-matière grasse végétale est ensuite traité dans un circuit unique pour fournir le produit final. Le mélange réchauffé entre 30 et 60°C, avantageusement entre 45 et 50°C et mieux encore à 50°C environ subit ensuite une étape d'homogénéisation. Un tel traitement d'homogénéisation implique l'application d'une pression destinée à réduire la taille des globules gras de chaque matière grasse afin d'obtenir des globules de dimension comparable dans une gamme de 3 à 20 μ, le plus avantageusement entre 5 et 12 μ, tout en assurant la liaison intime entre les globules gras provenant de la crème et de la matière grasse végétale. Dans la pratique, des pressions de 10 à 20 bars, de préférence de 12 à 18 bars se sont avérées convenables. Grâce à l'application de telles pressions, les globules gras d'origine différente ne peuvent plus se séparer et leur mélange est ainsi susceptible de subir, au cours du barattage, le phénomène dit d'inversion de phase qui fournit un produit final physiquement comparable au beurre.

Selon l'invention il convient d'obtenir avant pasteurisation, un mélange homogène titrant dans la pratique 3 43 à 46% de matière grasse (MG) et de préférence 45% de matière grasse totale. En retenant la valeur précise de 45% de matière grasse totale, il convient donc d'utiliser 80,4% de crème à 32% de matière grasse et 19,6% de matière grasse végétale (considérée comme étant à 100% de matière grasse), dans le cas où l'on souhaite un produit final contenant environ 43% de M.G. végétale et 57% de M.G. butyrique par rapport à la matière grasse totale.

Si l'on souhaite un produit fini de proportions différentes entre les deux types de matières grasses, il est possible de faire varier ces proportions pourvu que l'on obtienne à ce stade un mélange homogène titrant de 43 à 46% de MG totale.

Ces valeurs sont indiquées en poids, comme du reste dans toute la présente description où sauf indication contraire, tous les pourcentages et parties sont indiqués en poids. Ainsi qu'on l'a mentionné précédemment, la teneur en matière grasse de la crème peut varier dans des limites assez larges et le mélange provenant de l'étape d'homogénéisation peut lui-mème comporter une teneur en matière grasse variant en correspondance. Les écarts éventuels par rapport à une valeur déterminée de matière grasse dans le produit final peuvent être compensés aisement en réglant les paramètres d'utilisation du butyrateur.

Après l'étape d'homogénéisation, le produit est pasteurisé dans des conditions usuelles. Ainsi qu'il est connu de l'homme de l'art, la température et la durée de pasteurisation peuvent varier en fonction l'une de l'autre, la durée de la pasteurisation étant d'autant plus courte que la température est plus élevée. Dans la pratique on préfère ne pas utiliser une température supérieure à 100°C. Des conditions convenables de pasteurisation sont une température de 95°C et une durée d'environ 30 à 35 secondes environ.

Après la pasteurisation, le produit est cristallisé en continu au cours du refroidissement en particulier à une température inférieure à 20°C, de préférence de l'ordre de 15°C. En fonction du type de matière grasse végétale utilisée, il peut être intéressant de laisser au mélange un certain temps de repos pour améliorer le barattage.

La dernière étape du procédé de l'invention consiste à transformer le produit cristallisé en produit gras désiré dans des conditions connues et usuelles pour la fabrication du beurre par une opération de butyrification impliquant l'inversion de phase.

A la sortie de butyrateur, on obtient un produit gras comparable au beurre aussi bien pour son utilisation ultérieure que dans sa tenue, en particulier si l'on fait appel à une matière grasse végétale à base de coprah ou de colza hydrogéné. Ainsi qu'on l'a vu précédemment, un mélange de crème, crue ou pasteurisée, et de coprah pour hydrogéné ou de colza hydrogéné conduit à un produit final dont la texture et le goût sont en tout point comparables au beurre. Les caractéristiques avantageuses d'un tel produit sont liées d'une part au choix de la matière première végétale et d'autre part, aux conditions de mise en oeuvre du procédé. En effet celui-ci, après le mélangeage direct de la crème et de la matière grasse végétale, prévoit une homogénéisation sous pression qui permet de lier de manière très intime les deux constituants du mélange. Dans la suite du procédé c'est ce mélange homogénéisé qui est pasteurisé puis soumis à un barattage.

Le procédé de l'invention peut être mis en oeuvre de manière discontinue ou continue en particulier au cours de la butyrification, qui peut être réalisée avec une baratte discontinue ou un butyrateur continu. Il se prête de manière extrêmement intéressante à une production continue, la seule précaution à prendre étant de prévoir avant l'opération de butyrification, un bac tampon permettant d'absorber les à-coups de la production.

Sous un autre aspect, l'invention concerne également une installation pour la mise en oeuvre du procédé décrit ci-dessus, ladite installation comprenant, en succession:

– au moins une cuve de mélangeage sous agitation recevant la crème de lait et la matière grasse végétale;
– un homogénéisateur sous pression;
– un pasteurisateur-refroidisseur;
– un bac tampon;
– un butyrateur de type classique en beurrerie, continu ou non, ainsi que des dispositifs complémentaires en soi connus de moulage, de magasinage et de conditionnement du produit sortant du butyrateur.

On notera que l'installation selon l'invention combine des moyens simples et éprouvés dans la technique laitière. Des aspects importants de l'installation sont l'homogénéisateur et le butyrateur.

Selon l'invention, on peut utiliser, à titre d'homogénéisateur, n'importe quel appareil capable de soumettre le mélange crème-matière grasse végétale aux pressions indiquées précédemment. Des appareils actuellement disponibles et qui conviennent aux besoins de l'invention sont les vannes homogénéisatrices, qui comprennent une pompe de pression et un ensemble séparé avec diaphragme réglable d'homogénéisation. Un autre type d'appareil convenable est un homogénéisateur compact avec pompe intégrée à l'ensemble d'homogénéisation, lequel comprend une tête d'homogénéisation, rotative ou fixe. Un exemple d'homogénéisateur à tête rotative, disponible sous la marque "RANNIE" a fourni de bons résultats pratiques.

Selon l'invention, on peut utiliser tout butyrateur continu ou discontinu (baratte) déjà connu pour la production du beurre. On a obtenu de bons résultats avec un butyrateur continu disponible sur le marché sous la dénomination AHLBORN type 2500. Il va sans dire que les conditions de barattage (puissance, débit, température) devront être adaptées à la nature de la matière grasse végétale utilisée et à son pourcentage dans le mélange. De tels ajustements sont à la portée de l'homme de l'art et n'ont donc pas besoin d'être décrits en détail.

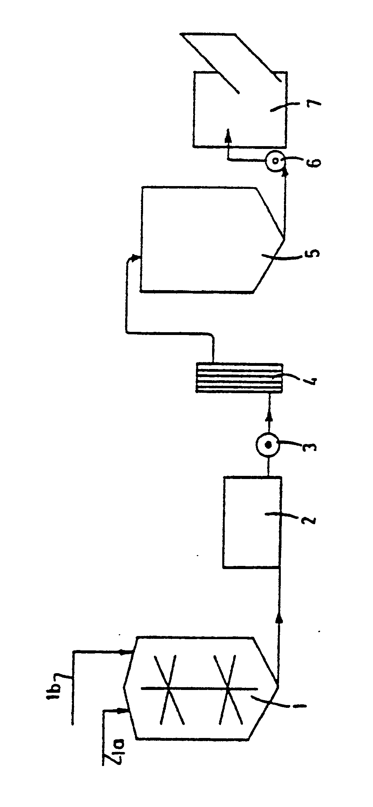

La figure unique de dessin annexé représente schématiquement une installation selon l'invention. Au dessin la référence 1 désigne un bac de mélange recevant les deux matières grasses préalablement portées à leur température de mélangeage, à savoir la crème de lait (1a) et la matière grasse végétale (1b). Le mélange sortant du bac 1 à une température de 45 à 50°C, en particulier de 50°C est envoyé dans un homogénéisateur 2 où il est soumis à une pression de l'ordre de 12 à 18 bars, ce qui permet de réduire la dimension des globules gras de chaque matière végétale dans une gamme de 5 à 12 micromètres. A titre d'homogénéisateur on utilise par exemple une vanne homogénéisatrice de type classique fonctionnant aux pressions indiquées ci-dessus ou, selon un mode de réalisation préféré, un homogénéisateur compact par exemple celui disponible sur le marché sous la dénomination "RANNIE". A la sortie de l'homogénéisateur 2, le produit est repris par une pompe 3 qui l'amène à un pasteurisateur-refroidisseur où il est réchauffé à 95°C pendant 35 secondes environ. A la sortie du pasteurisateur, le produit est introduit à la partie supérieure d'un bac-tampon 5. A la sortie de ce bac 5, le produit est repris par une pompe 6 et introduit dans un butyrateur 7, qui permet le barattage continu du produit.

Le produit final obtenu peut avoir tous les usages du beurre. A froid, il est tartinable à la température du réfrigérateur 5—8°C. Il peut accompagner les produits alimentaires traditionnels, tels que la charcuterie. Il peut être ajouté à des préparations chaudes en étant alors utilisé comme le beurre à des températures moyennes de 25 à 60°C. Enfin, il peut également servir comme agent de cuisson pour diverses denrées alimentaires, telles que les viandes ou les légumes.

L'invention sera encore illustrée par les exemples ci-après.

## Exemple 1

Dans une installation du type représenté à la figure unique on a introduit dans un bac 1 de la crème de lait de vache 1a crue ou pasteurisée, titrant 32% en poids de matière grasse. L'acidité de la crème était voisine de 12° Dornic. La crème 1a a été au préalable portée à une température d'environ 40°C. Par la ligne 1b, on a introduit une matière grasse végétale constituée de coprah hydrogéné pur. Les quantités respectives de crème 1a et de la matière végétale 1b introduites dans le bac 1 sont telles que le mélange titre finalement 45% de matière grasse totale, ce qui correspond sensiblement à 80,4% en poids de crème à 32% de matière grasse et 19,6% en poids de coprah pur hydrogéné. Pour permettre un mélange satisfaisant le courant 1b de matière grasse végétale est porté au préalable à 60°C. Le mélange sortant du bac 1 se trouve ainsi porté à une température moyenne de 50°C.

Le mélange du bac 1 passe ensuite dans l'homogénéisateur 2 où il subit une pression d'environ 15 bars. Dans cet exemple l'homogénéisateur est du type "RANNIE".

La pompe 3 reprend le produit sortant de l'homogénéisateur 2 et le fait passer sur un pasteurisateur où il est chauffé à 95°C pendant 35 secondes environ. A la sortie du pasteurisateur 4, le produit est introduit dans un bac-tampon 5. Par la pompe 6 il est introduit dans un butyrateur 7 où il subit un barattage en continu ou non. Dans l'exemple choisi, le barattage continu était réalisé sur un butyrateur AHLBORN type 2500.

Le produit traité dans le butyrateur 7 peut de manière classique dans la fabrication du beurre, recevoir divers additifs destinés à satisfaire à certains besoins. Par exemple, on peut procéder à une injection dans le corps du butyrateur d'un mélange lactique acidifiant et d'un mélange aromatisant. Si l'on désire un produit demi-sel on peut introduire une saumure ou du sel sec, si l'appareil le permet.

Le moulage du produit final est réalisé à la sortie du butyrateur 7 de toute manière connue, de même que le magasinage et le conditionnement qui sont effectués dans des conditions similaires à celles du beurre.

Un produit obtenu conformément à l'exemple ci-dessus présente les caractéristiques suivantes:

| | |
|---|---|
| Humidité | 15 à 18% |
| Matière grasse (MG) | 80 à 83% |
| Non gras | 1,2 à 2,4% |
| Point de fusion (phase grasse) | 32° |
| pH | 5,10 à 5,60 |
| Diamètre des globules de la phase émulsionnée: | 5 microns/10 microns |

Des compositions caractéristiques du produit sont les suivantes:

Composition des acides gras par chromatographie en phase gazeuse

| C 10 | 4,7% |
|------|------|
| C 10′ | 0,2% |
| C 12 | 24,5% |
| C 12′ | 0,2% |
| C 14 ISO | 0,1% |
| C 14 | 15,7% |
| C 14′ | 0,6% |
| C 15 ISO | 0,2% |
| C 15 Ante ISO | 0,3% |
| C 15 | 0,7% |
| C 16 ISO | 0,2% |
| C 16 | 23,2% |
| C 16′ | 0,9% |
| C 17 ISO | 0,3% |
| C 17 Ante ISO | 0,3% |
| C 17 | 0,4% |
| C 17′ | 0,2% |
| C 18 | 9,8% |
| C 18′ | 14,0% |
| C 18″ | 2,1% |
| C 18‴ | 1,0% |

Composition des acides gras par chromatographie en phase gazeuse (Suite)

| C 20 | 0,2% |
|------|------|
| C 20′ | 0,2% |

Composition des glycerides par poids moleculaire

| | |
|---|---|
| C 26 | 0,2% |
| C 28 | 0,2% |
| C 30 | 0,4% |
| C 32 | 0,7% |
| C 34 | 2,0% |
| C 36 | 7,6% |
| C 38 | 11,6% |
| C 40 | 16,1% |
| C 42 | 15,5% |
| C 44 | 10,8% |
| C 46 | 8,4% |
| C 48 | 6,9% |
| C 50 | 6,7% |
| C 52 | 7,3% |
| C 54 | 5,6% |

## Exemple 2

On a opéré comme dans l'Exemple 1 ci-dessus, mais en utilisant de l'huile de colza hydrogéné comme matière grasse végétale à la place d'huile de coprah hydrogéné. Le produit obtenu dans ce cas présente les caractéristiques suivantes:

| | |
|---|---|
| Humidité | 15 à 18% |
| Matière grasse (MG) | 80 à 83% |
| Non gras | 1,2 à 2,4% |
| Point de pression | 31°C |
| pH | 5,10 à 5,6 |
| Diamètre des globules de la phase émulsionnée | 5 à 10 μm |

Des compositions caractéristiques du produit sont les suivantes: Composition des acides gras par chromatographie en phase gazeuse:

7

| | | | |
|---|---|---|---|
| C | 4—Acide | butyrique | 1,3% |
| C | 6—Acide | caproïque | 0,95% |
| C | 8—Acide | caprylique | 0,6% |
| C | 10—Acide | caprique | 1,7% |
| C | 12—Acide | laurique | 2,3% |
| C | 14—Acide | myristique | 6,7% |
| C | 16—Acide | palmitique | 21,1% |
| C' | 16—Acide | palmitoéique | 1,2% |
| C | 18—Acide | stéarique | 10,2% |
| C' | 18—Acide | oléique | 52,6% |
| C'' | 18—Acide | linoléique | 0,55% |
| C''' | 18—Acide | linolénique | 0,8% |

## Revendications

1. Procédé pour l'obtention d'un produit gras en tout point comparable au beurre, à partir d'un mélange de crème de lait et d'au moins une matière grasse végétale, ledit procédé comprenant des étapes de mélangeage, d'homogénéisation et de pasteurisation avant cristallisation, le mélange cristallisé étant ensuite transformé par butyrification en produit gras désiré, ledit procédé étant caractérisé en ce qu'on mélange d'abord à chaud la crème et la matière grasse végétale à une température permettant le mélangeage, mais inférieure à la température de pasteurisation, en ce qu'on homogénéise le mélange porté à ladite température en le soumettant à une pression de 10 à 20 bars capable de réduire les globules gras des constituants du mélange à une dimension de l'ordre de 3 à 20 μm tout en assurant la liaison intime des globules de chacun des constituants, en ce qu'on pasteurise le mélange, en ce qu'on le fait ensuite cristalliser en continu et en ce qu'on transforme le mélange cristallisé en produit gras désiré par barattage ou butyrification avec inversion de phase dans des conditions connues et usuelles pour la fabrication de beurre.

2. Procédé selon la revendication 1, caractérisé en ce qu'on utilise de la crème de lait de vache, crue ou pasteurisée.

3. Procédé selon l'une des revendications 1 ou 2, caractérisé en ce que la crème a une teneur en matière grasse de 30% à 34% en poids environ, en particulier d'environ 32%.

4. Procédé selon l'une quelconque des revendications 1 à 3 caractérisé en ce que la matière grasse végétale est l'huile de soja, d'arachide, de palme de tournesol, de coprah, de colza ou leurs mélanges.

5. Procédé selon l'une quelconque des revendications 1 à 4, caractérisé en ce que la matière grasse végétale est hydrogénée ou non.

6. Procédé selon l'une quelconque des revendications 1 à 5, caractérisé en ce que la matière grasse est du coprah ou du colza hydrogéné ou un mélange de coprah hydrogéné ou de colza hydrogéné avec une huile végétale.

7. Procédé selon l'une quelconque des revendications 1 à 6, caractérisé en ce que le mélange de crème de lait et de matière grasse végétale est porté à une température de 30 à 60°C, avantageusement de 45 à 50°C.

8. Procédé selon l'une quelconque des revendications 1 à 7, caractérisé en ce que l'homogénéisation implique l'application d'une pression destinée à réduire la taille des globules gras de chaque matière grasse, afin d'obtenir des globules de dimensions comparables entre 5 et 12 μ, tout en assurant la liaison intime entre les globules gras provenant de la crème et de la matière grasse végétale.

9. Procédé selon l'une quelconque des revendications 1 à 8, caractérisé en ce que la pression d'homogénéisation est comprise entre 12 et 18 bars.

10. Procédé selon l'une quelconque des revendications 1 à 9, caractérisé en ce que le produit sortant de

8

l'homogénéisation titre 43 à 46% de matière grasse, en particulier 45% environ.

11. Installation pour la mise en oeuvre du procédé selon l'une quelconque des revendications 1 à 10, caractérisée en ce qu'elle comprend, en succession:

– au moins une cuve (1) de mélangeage sous agitation recevant la crème de lait (1a) et la matière grasse végétale (1b);

– un homogénéisateur (2) sous pression;

– un pasteurisateur (4);

– un bac-tampon (5);

– un butyrateur (7) de type classique en beurrerie, continu ou non, ainsi que des dispositifs complémentaires en soi connus du moulage, de magasinage et de conditionnement du produit sortant du butyrateur.

12. Installation selon la revendication 11, caractérisée en ce qu'elle comprend des moyens de préchauffage de la crème et de la matière grasse végétale avant leur introduction dans la cuve (1).

13. Installation selon l'une des revendications 11 ou 12, caractéridée en ce que l'homogénéisateur est du type vanne homogénéisatrice ou un homogénéisateur compact, par exemple à tête rotative.

14. Produit gras en tout point comparable au beurre, tant dans son emploi que dans sa tenue, obtenable par le procédé selon l'une quelconque des revendications 1 à 10, ledit produit contenant plus d'environ 43% de matière grasse végétale par rapport à la matière grasse totale.

15. Produit selon la revendications 14, dans lequel la matière grasse butyrique est de la crème de lait.

16. Produit selon la revendication 15, dans lequel la teneur en matière grasse de la crème de lait varie entre 30 et 34% en poids.

17. Produit selon la revendication 14, dans lequel la matière grasse butyrique est une crème concentrée ayant une teneur en matière grasse de 34% ou davantage, par exemple une crème concentrée à 50% en matière grasse.

18. Produit selon la revendication 14, dans lequel la matière grasse butyrique est une crème reconstituée à partir de matière grasse lactique anhydre (MGLA ou butter-oil).

19. Produit selon l'une quelconque des revendications 14 à 18, obtenu à partir d'un mélange dans lequel les proportions de la matière grasse butyrique et de la matière grasse autre que butyrique (considérée comme étant à 100% de matière grasse) sont telles que la matière grasse totale du mélange se situe dans la gamme de 43 à 46%, le produit final présentant des proportions variables entre les deux types de matières grasses.

20. Produit selon l'une quelconque des revendications 14 à 19, obtenu à partir de crème de lait et de coprah hydrogéné, et ayant la composition:

| | |
|---|---|
| Humidité | 15 à 18% |
| Matières grasses (MG) | 80 à 83% |
| Non gras | 1,2 à 2,4% |
| Point de fusion (phase grasse) | 32°C |
| pH | 5,10 à 5,60 |
| Diamètre des globules de la phase émulsionnée | 5 microns/10 microns |

21. Produit selon l'une quelconque des revendications 14 à 19, obtenu à partir de crème de lait et de colza hydrogéné, et ayant la composition:

| | |
|---|---|
| Humidité | 15 à 18% |
| Matières grasses (MG) | 80 à 83% |
| Non gras | 1,2 à 2,4% |
| Point de pression | 31°C |
| pH | 5,10 à 5,6 |
| Diamètre des globules de la phase émulsionnée | 5 à 10 microns |

## Patentansprüche

1. Verfahren zur Herstellung eines Fettproduktes, in jedem Punkt vergleichbar mit Butter, ausgehend von einer Mischung aus Milchrahm und wenigstens einem Pflanzenfett, umfassend die Schritte der Mischung, der Homogenisierung und der Pasteurisierung vor der Kristallisation, die anschließende Umwandlung der kristallinen Mischung durch Buttern in das gewünschte Fettprodukt, dadurch gekennzeichnet, daß man zuerst den Rahm und das Pflanzenfett in der Wärme bei einer Temperatur mischt, die das Mischen erlaubt, aber unterhalb

der Pasteurisierungstemperatur liegt, daß man die auf diese Temperatur gebrachte Mischung homogenisiert, indem man sie einem Druck von 10 bis 20 bar unterwirft, der in der Lage ist, die Fettkügelchen der Bestandteile der Mischung auf eine Größenordnung von 3 bis 20 µm zu reduzieren, wobei man die innige Verbindung der Kügelchen jedes der Bestandteile sicherstellt, die Mischung pasteurisiert, daß man anschließend kontinuierlich kristallisiert und die kristallisierte Mischung in das gewünschte Fettprodukt durch Schlagen oder Buttern unter Phasenumkehr unter Bedingungen, die für die Herstellung von Butter bekannt und üblich sind, umwandelt.

2. Verfahren gemäß Anspruch 1, dadurch gekennzeichnet, daß man Rahm von Kuhmilch, roh oder pasteurisiert, verwendet.

3. Verfahren gemäß einem der Ansprüche 1 oder 2, dadurch gekennzeichnet, daß der Rahm einen mittleren Fettgehalt von ca. 30 bis 34 Gew.-%, insbesondere von ungefähr 32 % hat.

4. Verfahren gemäß irgendeinem der Ansprüche 1 bis 3, dadurch gekennzeichnet, daß das Pflanzenfett Sojaöl, Erdnußöl, Palmöl, Sonnenblumenöl, Kokosöl, Rapsöl oder eine ihrer Mischungen ist.

5. Verfahren gemäß irgendeinem der Ansprüche 1 bis 4, dadurch gekennzeichnet, daß das Pflanzenfett gesättigt ist oder nicht.

6. Verfahren gemäß irgendeinem der Ansprüche 1 bis 5, dadurch gekennzeichnet, daß das Fett aus Kokosnußöl oder gesättigtem Rapsöl oder aus einer Mischung von gesättigtem Kokosnußöl oxer gesättigtem Rapsöl mit einem Pflanzenöl besteht.

7. Verfahren gemäß irgendeinem der Ansprüche 1 bis 6, dadurch gekennzeichnet, daß die Mischung aus Milchrahm und Pflanzenfett auf eine Temperatur von 30 bis 60°C, vorteilhafterweise von 45 bis 50°C, gebracht wird

8. Verfahren gemäß irgendeinem der Ansprüche 1 bis 7, dadurch gekennzeichnet, daß die Homogenisierung die Anwendung eines Druckes impliziert, der die Größe der Fettkügelchen jedes Fettes reduziert, um Fettkügelchen von vergleichbaren Abmessungen zwischen 5 und 12 µ, zu erhalten, wobei eine innige Verbindung zwischen den Fettkügelchen aus dem Rahm und Pflanzenfett sichergestellt wird.

9. Verfahren gemäß irgendeinem der Ansprüche 1 bis 8, dadurch gekennzeichnet, daß der Druck der Homogenisierung zwischen 12 und 18 bar beträgt.

10. Verfahren gemäß irgendeinem der Ansprüche 1 bis 9, dadurch gekennzeichnet, daß das Produkt, das die Homogenisierungsstufe verläßt, einen Fettgehalt von 43 bis 46 % hat, insbesondere ungefähr 45 %.

11. Vorrichtung für die Verwendung des Verfahrens nach irgendeinem der Ansprüche 1 bis 10, dadurch gekennzeichnet, daß sie in Reihenfolge enthält:
    – wenigstens einen Mischbehälter (1) mit Rührer, enthaltend den Milchrahm (1a) und das Pflanzenfett (1b);
    – einen Homogenisator (2) unter Druck;
    – einen Pasteurisator (4);
    – ein Pufferbecken (5);
    – einen Butterer (7) vom klassischen Typ der kontinuierlichen oder diskontinuierlichen Butterherstellung; sowie bekannte zusätzliche Vorrichtungen der Formung, der Lagerung und der Konditionierung des Produktes, das den Butterer verläßt.

12. Vorrichtung gemäß Anspruch 11, gekennzeichnet durch Mittel zum Vorheizen des Rahms und des Pflanzenfetts vor ihrer Zugabe in den Behälter (1).

13. Vorrichtung gemäß einem der Ansprüche 11 oder 12, dadurch gekennzeichnet, daß der Homogenisator vom Typ Schwinghomogenisator oder Kompakthomogenisator ist, beispielsweise mit rotierendem Homogenisier-Kopf.

14. Fettprodukt, in jedem Punkt vergleichbar mit Butter, sowohl in seinem Gebrauch wie in seinem Gehalt, erhaltbar nach dem Verfahren gemäß irgendeinem der Ansprüche 1 bis 10, dieses Produkt enthaltend mehr als ungefähr 43% von Pflanzenfett in Beziehung auf den totalen Fettgehalt.

15. Produkt gemäß Anspruch 14, in dem das Butterfett Milchrahm ist.

16. Produkt gemäß Anspruch 15, worin der Fettgehalt des Milchrahms zwischen 30 bis 34 Gew.-% variiert.

17. Produkt gemäß Anspruch 14, in dem das Butterfett ein Rahmkonzentrat ist, mit einem Fettgehalt von 34 % und mehr, beispielsweise ein Rahmkonzentrat mit 50 % Fett.

18. Produkt gemäß Anspruch 14, worin das Butterfett ein Rahm ist, der hergestellt ist aus Fett-Milchsäureanhydrid (MGLA oder Butteröl).

19. Produkt gemäß irgendeinem der Ansprüche 14 bis 18, erhalten aus der Mischung, in der die Teile des Butterfettes und die des Nicht-Butterfettes (betrachtet als 100 % Fettgehalt) so sind, daß der Gesamtfettgehalt der Mischung in einem Bereich von 43 bis 46 % liegt und das Endprodukt variable Anteile zwischen beiden Fett-Typen aufweist.

20. Produkt gemäß irgendeinem der Ansprüche 14 bis 19, erhalten aus Milchrahm und gesättigtem Kokosöl mit der Zusammensetzung:

Wassergehalt               15 bis 18 %

| Fettgehalt | 80 bis 83 % |
| Nichtfett | 1,2 bis 2,4 % |
| Schmelzpunkt (Fettphase) | 32°C |
| pH | 5,10 bis 5,60 |
| Durchmesser der Kügelchen der emulgierten Phase | 5 bis 10 μm. |

21. Produkt gemäß irgendeinem der Ansprüche 14 bis 19, erhalten aus Milchram und gesättigtem Rapsöl mit der Zusammensetzung:

| Wassergehalt | 15 bis 18 % |
| Fettgehalt | 80 bis 83 % |
| Nichtfett | 1,2 bis 2,4 % |
| Druckpunkt | 31°C |
| pH | 5,10 bis 5,6 |
| Durchmesser der Kügelchen der emulgierten Phase | 5 bis 10 μm. |

## Claims

1. Process for obtaining a fatty product entirely comparable to butter, from a mixture of cream of milk and at least one plant fatty substance, the said process comprising mixing, homogenization and pasteurization stages before crystallization, the crystallized mixture being subsequently converted by butyrification to the required fatty product, the said process being characterized in that the cream and the plant fatty substance are first mixed hot at a temperature which permits the mixing but is lower than the pasteurization temperature, in that the mixture heated to the said temperature is homogenized by being subjected to a pressure of 10 to 20 bars capable of reducing the fatty globules of the components of the mixture to a size of the order of 3 to 20 μm while ensuring an intimate coupling of the globules of each of the components, in that the mixture is pasteurized, in that it is then continuously crystallized and in that the crystallized mixture is converted to the required fatty product by churning or a buttermaking process with phase inversion under known and usual conditions for the manufacture of butter.

2. Process according to Claim 1, characterized in that cream of cow's milk, raw or pasteurized, is used.

3. Process according to either of Claims 1 or 2, characterized in that the cream has a fatty substance content of 30% to 34% by weight approximately, in particular approximately 32%.

4. Process according to any one of Claims 1 to 3, characterized in that the plant fatty substance is soya oil, peanut oil, palm oil, sunflower oil, copra oil, rape oil or mixtures thereof.

5. Process according to any one of Claims 1 to 4, characterized in that the plant fatty substance is hydrogenated or not.

6. Process according to any one of Claims 1 to 5, characterized in that the fatty substance is hydrogenated rape or copra or a mixture of hydrogenated copra or of hydrogenated rape with a vegetable oil.

7. Process according to any one of Claims 1 to 6, characterized in that the mixture of cream of milk and of plant fatty substance is heated to a temperature of 30 to 60°C, advantageously of 45 to 50°C.

8. Process according to any one of Claims 1 to 7, characterized in that the homogenization involves the application of a pressure intended to reduce the size of the fatty globules of each fatty substance in order to obtain globules of comparable sizes between 5 and 12 μ, while ensuring an intimate coupling between the fatty globules originating from the cream and from the plant fatty substance.

9. Process according to any one of Claims 1 to 8, characterized in that the homogenization pressure is between 12 and 18 bars.

10. Process according to any one of Claims 1 to 9, characterized in that the product leaving the homogenization titrates at 43 to 46% of fatty substance, in particular approximately 45%.

11. Equipment for implementing the process according to any one of Claims 1 to 10, characterized in that it comprises, in sequence:
- at least one vessel (1) for mixing with stirring, which receives the cream of milk (1a) and the plant fatty substance (1b);
- a pressurized homogenizer (2);
- a pasteurizer (4);
- a buffer-tank (5),
- a buttermaking machine (7) of the type conventional in butter manufacturing, continuous or otherwise, and supplementary devices, known per se, for moulding, storing and packaging the product leaving the

buttermaking machine.

12. Equipment according to Claim 11, characterized in that it comprises means for preheating the cream and the plant fatty substance before they are introduced into the vessel (1).

13. Equipment according to either of Claims 11 or 12, characterized in that the homogenizer is of a homogenizing valve type or a compact homogenizer, for example with a rotary head.

14. Fatty product entirely comparable to butter, both in its use and in its behaviour, which can be obtained by the process according to any one of claims 1 to 10, said product containing more than about 43% of plant fatty substance compared with the total fatty substance.

15. Product according to Claim 14, in which the butyric fatty substance is cream of milk.

16. Product according to Claim 15, in which the fatty substance content of the cream of milk varies between 30 and 34% by weight.

17. Product according to Claim 14, in which the butyric fatty substance is a concentrated cream having a fatty substance content of 34% or more, for example a concentrated cream containing 50% of fatty substance.

18. Product according to Claim 14, in which the butyric fatty substance is a cream reconstituted from anhydrous lactic fatty substance (ALFS or butter-oil).

19. Product according to any one of Claims 14 to 18, obtained from a mixture in which the proportions of the butyric fatty substance and of the fatty substance other than butyric (considered as being 100% of fatty substance) are such that the total fatty substance in the mixture is in the range of 43 to 46%, the final product having variable proportions of fatty substances of both types.

20. Product according to any one of Claims 14 to 19, obtained from cream of milk and hydrogenated copra, and having the composition:

| | |
|---|---|
| Moisture | 15 to 18% |
| Fatty substances (FS) | 80 to 83% |
| Non-fat | 1.2 to 2.4% |
| Melting point (fatty phase) | 32°C |
| pH | 5.10 to 5.60 |
| Globule diameter in the emulsified phase | 5 microns/10 microns |

21. Product according to any one of Claims 14 to 19, obtained from cream of milk and hydrogenated rape, and having the composition:

| | |
|---|---|
| Moisture | 15 to 18% |
| Fatty substances (FS) | 80 to 83% |
| Non-fat | 1.2 to 2.4% |
| Pressure point | 31°C |
| pH | 5.10 to 5.6 |
| Globule diameter in the emulsified phase | 5 to 10 microns |